# EUROPEAN PATENT APPLICATION

(11) **EP 2 806 268 A1**
(43) Date of publication of application: **26.11.2014**
(21) Application number: 13168759.2
(22) Date of filing: 22.05.2013
(51) Int. Cl.: G01N 31/22

(54) **Chlorophyll-based sensors for mineral and organic acids**

(71) Applicant: Honeywell International Inc., Morristown, NJ 07962-2245 (US)
(72) Inventor: Serban, Bogdan-Catalin, 60000 Bucharest, Sector 2 (RO); Buiu, Octavian, 014459 Bucharest, Bucharest (RO); Brezeanu, Mihai, 061397 Bucharest (RO); Cobianu, Cornel, 061672 Bucharest (RO); Diaconu, Cristian, 020273 Bucharest (RO)
(74) Representative: Houghton, Mark Phillip

(57) **Abstract**

The present disclosure relates to a system comprising a hygroscopic material; one or more chlorophyll compounds; and a substrate. The substrate includes a region configured to support the hygroscopic material and the one or more chlorophyll compounds. The system is useful in methods for detecting the presence of a target gas in an atmosphere. The system is also useful in quantifying the concentration of a target gas in an atmosphere.

## Description

### BACKGROUND

The ability to detect mineral and organic acids is important to the safe operation of numerous, highly complex industrial enterprises, including semiconductor manufacturing (where hydrogen chloride and hydrogen fluoride are employed), chemical plants (where hydrogen fluoride is used), and the food industry (employing acetic acid, phosphoric acid, propionic acid, butyric acid, etc.).

Systems are known for the colorimetric detection of mineral and organic acids. Such systems read color intensity changes and determine the gas concentration based on that color intensity. Despite their good sensitivity and fast response time (few minutes), some known systems are complicated to manufacture and/or require the use of dangerous compounds that are potentially harmful to the manufacturer, the user and/or the environment.

### SUMMARY

The embodiments of the present disclosure provide sensors for mineral and organic acids based on chlorophyll molecules.

In Embodiment 1, the invention relates to a system comprising: a hygroscopic material; one or more chlorophyll compounds; and a substrate including a first side, an opposing second side, and at least one region configured to support the hygroscopic material and the one or more chlorophyll compounds.

In Embodiment 2, the invention relates to a method comprising: directing an atmospheric gas through or past a hygroscopic material and one or more chlorophyll compounds supported by a substrate; detecting a change in color of the substrate; and calculating an amount of a target gas present in the atmosphere based, at least in part, on the detected change in color.

In Embodiment 3, the system of Embodiment 1 further comprises a plenum chamber, positioned on the first side of the substrate, configured to draw an atmospheric gas from the second side of the substrate, through or past the at least one region supporting the hygroscopic material and the one or more chlorophyll compounds.

In Embodiment, 4, in the system of Embodiment 3, the atmospheric gas is drawn through the at least one region supporting the hygroscopic material and the one or more chlorophyll compounds, to the first side of the substrate.

In Embodiment 5, in the method of Embodiment 2 or the system of Embodiment 3, the atmospheric gas comprises a target gas.

In Embodiment 6, in the method or system of Embodiment 5, the target gas comprises a mineral acid or an organic acid.

In Embodiment 7, in the method or system of Embodiment 5, the target gas comprises hydrochloric acid, hydrobromic acid, hydroiodic acid, sulphuric acid, nitric acid, phosphoric acid, hydrofluoric acid or mixtures thereof.

In Embodiment 8, in the method or system of Embodiment 5, the target gas comprises oxalic acid, formic acid or mixtures thereof.

In Embodiment 9, in the method of Embodiment 2 or the system of Embodiment 3, the one or more chlorophyll compounds comprises chlorophyll a, chlorophyll b, chlorophyll c1, chlorophyll c2, chlorophyll d or mixtures thereof.

In Embodiment 10, in the method of Embodiment 2 or the system of Embodiment 3, the hygroscopic material comprises a cyclodextrin, xylitol, maltitol or mixtures thereof.

In Embodiment 11, the system of Embodiment 1 further comprises a detector positioned to detect a change in color of a portion of the substrate.

In Embodiment 12, the system of Embodiment 1 further comprises an applicator for applying the hygroscopic material and/or the chlorophyll compound to the substrate.

In Embodiment 13, in the system of Embodiment 12, the applicator comprises an ink jet printer.

In Embodiment 14, the method of Embodiment 2 further comprises directing the gas from the hygroscopic material and one or more chlorophyll compounds to a plenum chamber.

In Embodiment 15, the method of Embodiment 2 further comprises calculating an amount of a target gas present in the atmosphere based, at least in part, on the detected change in color.

### DETAILED DESCRIPTION OF THE DRAWINGS

The embodiments of the present invention will be described, by way of example only, by reference to the FIGS. 1-3 of the accompanying drawings in which:

FIG. 1 shows a section of a substrate used in accordance with one embodiment;

FIG. 2 is a schematic view of a colorimetric gas sensing apparatus of one embodiment; and

FIG. 3 is a scheme showing the displacement of a Mg cation, in the presence of HCl, from a tetrapyrrole ring.

### DETAILED DESCRIPTION

Embodiments of the present invention relate to a system comprising: a hygroscopic material; one or more chlorophyll compounds; a substrate including a first side, an opposing second side, and at least one region configured to support the hygroscopic material and the one or more chlorophyll compounds.

In some embodiments, the substrate may be a strip or tape, which may be housed in a cassette, so that sequential regions of the strip or tape are exposed to the atmosphere being monitored for the presence of mineral acids (e.g., hydrochloric acid, hydrobromic acid, hydroiodic acid, sulphuric acid, nitric acid, phosphoric acid, hydrofluoric acid) and/or organic acids (e.g., acetic acid, oxalic acid, formic acid) In other embodiments, the substrate may be a sheet.

In some embodiments, the substrate may be gas-porous to allow a sample of the gas from the monitored region to be drawn through it or it may be non-porous, in which case, the gas must be passed over the substrate. In some embodiments, the substrate is liquid-absorbent. When the substrate is liquid-absorbent, a liquid applied to the substrate is held by the substrate. In some embodiments, the substrate is sufficiently absorbent to prevent a liquid applied thereto from significantly migrating away from the area to which it is applied.

In some embodiments, the substrate comprises a porous material, such as, for example, filter paper or cellulose (e.g., cellulose acetate, ethylcellulose, methyl cellulose, and oxypropylcellulose).

In some embodiments, the substrate comprises a hygroscopic material. The hygroscopic material may be applied to the substrate neat (e.g., as a powder); as a gel; as an emulsion; as a suspension; or as a solution in a solvent (e.g., ethanol, isopropylic alcohol, methanol, 2- methoxyethanol). In some embodiments, the hygroscopic material is applied to the substrate as a solution in a solvent. In some embodiments, the hygroscopic material comprises other ingredients, including diluents.

The hygroscopic material may be applied as a spot on the substrate, where the spot may take any shape, including a circle (e.g., a dot), square, rectangle or an oval. The size of the spot, in some embodiments, does not exceed the dimensions of the substrate.

In some embodiments, hygroscopic material may be applied to the substrate before the substrate is introduced into the system or at some point after the substrate is introduced into the system.

The hygroscopic material, in some embodiments, comprises a cyclodextrin (α, β or mixtures thereof), xylitol, maltitol or mixtures thereof. The hygroscopic material, in some embodiments, is sufficiently hygroscopic so as to provide sufficient moisture so that the mineral and/or organic acid ionizes, partially or completely, in situ (*e.g*., on the substrate).

The term "chlorophyll compound" or "chlorophyll compounds" are used interchangeably and refers to one or more compounds belonging to a class of porphyrin-containing compounds, including, but not limited to, chlorophyll a, chlorophyll b, chlorophyll c1, chlorophyll c2, chlorophyll d, chlorophyll f or combinations thereof. The chemical structures of chlorophyll a, b, c1, c2, and d are given below.

| | | |
|---|---|---|
| 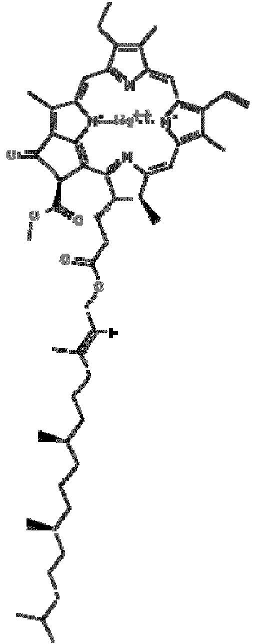 | 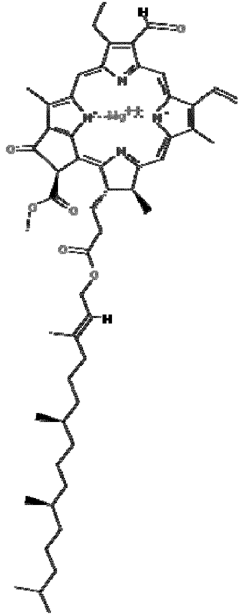 | 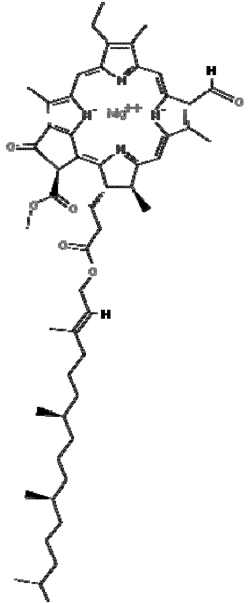 |
| Chlorophyll a | Chlorophyll b | Chlorophyll d |

| | |
|---|---|
| 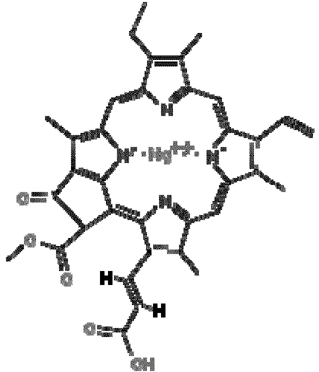 | 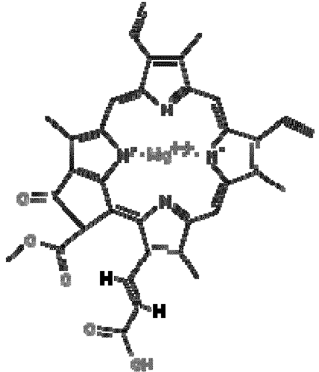 |
| Chlorophyll c1 | Chlorophyll c2 |

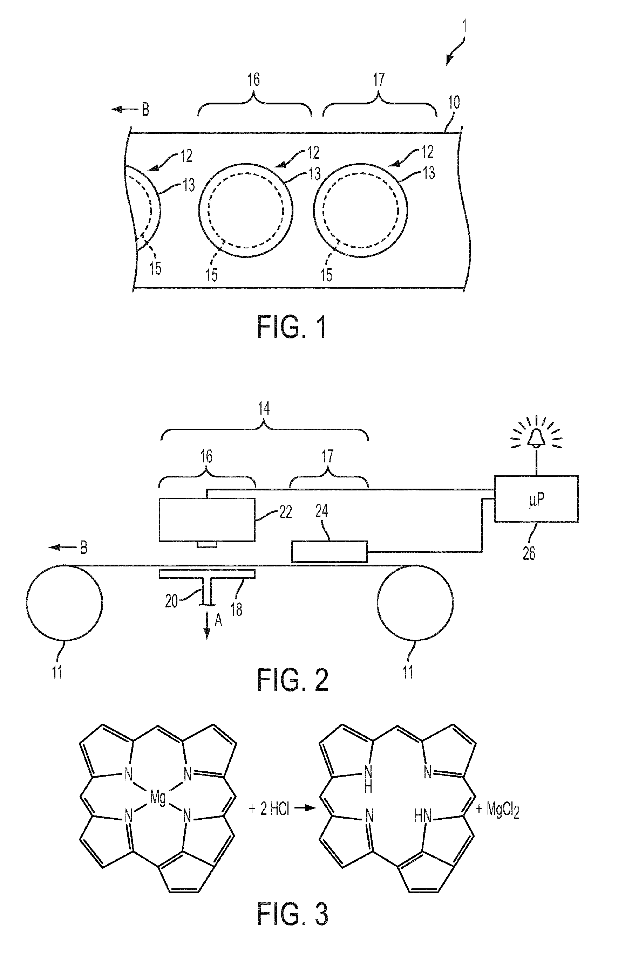

The magnesium cations contained in the chlorophyll compound are considered to be hard acids, according to the Hard Soft Acid Base (HSAB) theory, because they are compact, with their electrons tightly held close to the nucleus, and are not very polarizable. The nitrogen atoms in the tetrapyrrole ring of the chlorophyll compound, in contrast, are considered borderline bases, due in part to the delocalized nature of the nitrogen lone pair electrons. Those of skill in the art will recognize that, according to HSAB theory, hard acids will preferentially react with hard bases and soft acids will preferentially react with soft bases. As a consequence of this principle, the Mg cation in the chlorophyll compound may be displaced from the tetrapyrrole ring in the presence of cations, such as Cu(II) and Zn (II); in the presence of a mineral acid, such as HCl (as shown in FIG. 3); or in the presence of an organic acid, such as acetic acid (*i.e.,* CH₃COOH). The displacement of the magnesium cation in the presence of, *e.g*., a mineral and/or an organic acid, converts chlorophyll into pheophytin a, while chlorophyll b is converted into pheophytin b. These conversions are accompanied by color changes. While both chlorophyll a and b are bright green, pheophytin a is green-gray and pheophytin b is olive-green. These color changes in the chlorophyll compound may be detected using, *e.g*., an electronic detector or the naked eye and, in some embodiments, the amount of a target gas present in the atmosphere (*e.g*., a gas comprising a mineral acid and/or an organic acid) may be calculated based, at least in part, on the detected change in color (*e.g*., the amount by which the color changes) when the target gas comes in contact with the chlorophyll compound.

The chlorophyll compound may be applied as a spot on the substrate, where the spot may take any shape, including a circle, square, rectangle or an oval. The size of the spot, in some embodiments, does not exceed the dimensions of the substrate.

In some embodiments, chlorophyll compound may be applied to the substrate before the substrate is introduced into the system or at some point after the substrate is introduced into the system.

In some embodiments, the chlorophyll compound may be applied to substantially the same region containing the hygroscopic material. For example, the chlorophyll compound (or compounds) may be applied to the substrate neat (*e.g*., as a powder); as a gel; as an emulsion; as a suspension; or as a solution in a solvent (*e.g*., ethanol). In some embodiments, the chlorophyll compound is applied to the substrate first, followed by the application of the hygroscopic material. In other embodiments, the hygroscopic material is applied to the substrate first, followed by the application of the chlorophyll compound. In still other embodiments, the hygroscopic material and the chlorophyll compound are applied at the same time. For example, a chlorophyll compound and a hygroscopic material may be dissolved in a solvent. A substrate is then passed through the resulting solution. The coated substrate is then substantially dried in an oven at a temperature of from about 30°C to about 100°C, *e.g*., from about 40°C to about 70°C; from about 40°C to about 60°C; or from about 45°C to about 55°C. In some embodiments, the coated substrate is substantially dried in an ovem at a temperature of about 50°C.

In some embodiments, the chlorophyll compound and/or the hygroscopic material may be applied using other applicators, including a dropper, syringe dispenser or an inkjet printing head, which can accurately meter a required amount of liquid onto the substrate.

In some embodiments, the system of the embodiments of the present invention also comprise a plenum chamber, positioned on the first side of the substrate, configured to draw an atmospheric gas from the second side of the substrate, through or past the at least one region supporting the hygroscopic material and the one or more chlorophyll compounds. In some embodiments, the plenum chamber is configured to draw an atmospheric gas from the second side of the substrate, through or past the at least one region supporting the hygroscopic material and the one or more chlorophyll compounds, to the first side of the substrate.

In some embodiments, the system of the embodiments of the present invention draws a predetermined amount of atmospheric gas though or over the substrate at, *e.g.*, the location where the chlorophyll compound is located. The atmospheric gas, which, in some embodiments contains a target gas, is drawn by, *e.g*., by operating a pump to draw gas for a preset time. The amount of chlorophyll compound applied is, in some embodiments, such that it produces a color change that is within the range of color changes that would be expected for anticipated target gas concentrations, taking into account the time that the atmospheric gas is drawn though or over the substrate containing the chlorophyll compound.

In some embodiments, the color change observed when a target gas contacts the substrate bearing the chlorophyll compound and the hygroscopic material is proportional to the concentration of target gas (*e.g*., a mineral acid or organic acid) in the atmospheric gas drawn into the system. The system may, in some embodiments, be calibrated such that variations in the color change may be correlated to specific concentrations, or concentration ranges, of the target gas.

As mentioned above, the color change observed when a target gas contacts the substrate bearing the chlorophyll compound and the hygroscopic material may be detected and, in some embodiments, quantified using an electronic detector (*e.g*., a photosensitive cell). The detector would obtain a signal corresponding, *e.g*., to the change in wavelength of light reflected or transmitted by the compound on the substrate obtained (*e.g.,* pheophytin a) after the magnesium cation is displaced from the chlorophyll compound. The signal may be compared to the signal obtained with a predetermined range or threshold value. In some embodiments, if the signal from, *e.g*., the detector, is within the predetermined range or threshold value, the system may generate a first alarm signal indicating that the operation of the system is functioning properly. In some embodiments, if the measured signal falls outside the range or falls beyond the threshold, the system may generate a second alarm signal indicating that the signal falls outside the range or falls beyond the threshold.

In some embodiments, the system may include a gas sensing station. In some embodiments, the gas sensing station includes: (a) a location at which the chlorophyll compound and the hygroscopic material are located on the substrate; (b) a location at which gas from the atmosphere is drawn through or past the substrate; and (c) a location at which a color change is detected when a target gas contacts the substrate bearing the chlorophyll compound and the hygroscopic material. These locations can all be the same or different. For example, locations (a), (b), and (c) may be different from each other. In some embodiments, locations (a), (b), and (c) are the same. The functions that are carried out at the gas sensing station can take place simultaneously for different substrates or regions of a single substrate or they can take place at different times.

In some embodiments, the system takes readings of the target gas periodically; before each reading, the substrate is advanced to the gas sensing station (if the substrate can be used for multiple readings) or a fresh (*e.g.,* unused) substrate is provided at the gas sensing station (if the substrate can be used for a single reading only).

In some embodiments, the system is controlled by a microprocessor, that can perform/control one or more of the following functions: the advancement of the substrate; the drawing of the gas over or through the substrate; the reading of the wavelength of light reflected or transmitted by the substrate before and after the substrate bearing the chlorophyll compound and the hygroscopic material is contacted with a gas from the atmosphere being monitored; the alarm or calibration function; and the printing, display and storage of the quantity of target gas detected.

Referring to FIGS. 1 and 2, there is shown non-limiting examples of some embodiments of the invention. FIGS. 1 and 2 show a tape 1 that can be advanced between a holder (*e.g.,* a cassette), for example, two spools 11 in the direction of arrow "B," manually or by a motor (not shown). The tape 1 is made up of a substrate 10 on which are deposited regions of chlorophyll compound 13 (solid line) and regions of hygroscopic material 15 (broken line), in this case dots 12, where the region of chlorophyll compound 13 happens to be larger than the region of hygroscopic material. Those of skill in the art will recognize that the regions 13 and 15 could be the same size or the region 15 could be larger than the region 13.

In FIG. 1, the dots are arranged in a single row but more than one row of dots 12 may be provided and same or different chlorophyll compounds can be used in each of the rows. For example, the dots of one row may be made up of chlorophyll a and the dots of a second row may be formed from a different chlorophyll compound, e.g., chlorophyll c1. The dots 12 may be formed on the substrate 10 by a manufacturer of the substrate and/or the cassette or deposited in situ by the user. In some embodiments, the dots 12 are suitably deposited by inkjet printing techniques.

The apparatus illustrated in FIG. 2, which is an example of a system of the embodiments of the present invention, may include a gas detection station 14. In some embodiments, the system may also comprise an applicator, for example, an inkjet printer 24 that applies the chlorophyll compound and/or the hygroscopic material to the substrate. The printer may incorporate more than one inkjet printing heads, e.g., one to apply the chlorophyll compound and another to apply the hygroscopic material held in independent reservoirs (not shown). Alternatively, the printer may incorporate a single inkjet printer head that applies the chlorophyll compound and the hygroscopic material at the same time, *e.g.,* as a solution. In some embodiments, the system also comprises a microprocessor 26 that can control the application of the chlorophyll compound and/or the hygroscopic material via, *e.g.,* the inkjet printer 24. In some embodiments, the example system shown in FIG. 2 also contains a source of heat (not shown) that can heat the substrate onto which the chlorophyll compound and the substrate have been applied (*e.g.,* by inkjet printing) to a temperature of from about 30°C to about 100°C, e.g., from about 40°C to about 70°C; from about 40°C to about 60°C; or from about 45°C to about 55°C. The heating of the substrate substantially dries the substrate. In some embodiments, the substrate is heated at a temperature of about 50°C to substantially dry the substrate.

If the system comprises a gas detection station 14, the gas detection station 14, downstream of the printer 24, may comprise a location 16 at which an electronic detector, for example, detector 22 is provided that measures the radiation transmitted or reflected by dot 12 before and/or after the dot 12 comprising the chlorophyll compound and the hygroscopic material comes in contact with the target gas, at a wavelength that is transmitted or reflected by the chlorophyll compound and/or the compound formed when the chlorophyll compound comes in contact with the target gas. The detector generates a signal to the microprocessor 26 that compares it with, e.g., a pre-programmed look-up table. The degree of color change measured can be correlated to the concentration of the target gas in the atmosphere.

In some embodiments, the detector 22 comprises a photosensitive cell that may be located behind suitable filters that restrict the radiation reaching the cell to that transmitted by the compound formed after the chlorophyll compound comes in contact with the target gas. The photosensitive cell may be a still or video camera that forms an image of dot 12 that has passed through the filters either in color or in a greyscale. The brightness of the pixels forming the image of the areas can be used to assess the color change, which can be recorded by the camera.

In some embodiments, at location 16, there is provided a plenum chamber. A gas from an atmosphere being monitored may be drawn through or past the or each dot 12 present at location 16 within the gas detection station 14. The plenum chamber 18 is connected to a source of reduced pressure, *e.g.,* a pump (not shown), via a line 20, and this arrangement draws gas from the atmosphere being monitored through the tape substrate in the direction of the arrow "A." In some embodiments, the pump is controlled by the microprocessor 26.

Once a sample gas from the atmosphere being monitored has been drawn through or past the dots 12 at location 16, the radiation transmitted or reflected by the dot 12 is measured by the detector 22. Again a signal is generated that is fed to the microprocessor 26, which, in some embodiments, compares it with a pre-programmed look-up table. In some embodiments, the measurement is taken at a wavelength transmitted or reflected by the chlorophyll compound and/or at the wavelength transmitted or reflected by the compound formed after the chlorophyll compound is contacted by the target gas. Since the degree of color change at this wavelength may correlate with the concentration of the target gas within the atmosphere, the color is, in some embodiments, an indication of the concentration of the target gas. In order to measure the wavelength transmitted or reflected by the chlorophyll compound and/or the wavelength transmitted or reflected by the compound formed after the chlorophyll compound is contacted by the target gas, the tape will be exposed to a source of suitable radiation, which may simply be ambient radiation.

Embodiments of the invention described and claimed herein are not to be limited in scope by the specific embodiments herein disclosed, since these embodiments are intended as illustration of several aspects of the disclosure. Any equivalent embodiments are intended to be within the scope of this disclosure. Indeed, various modifications of the embodiments in addition to those shown and described herein will become apparent to those skilled in the art from the foregoing description. Such modifications are also intended to fall within the scope of the appended claims.

All publications, including non-patent literature (*e.g.,* scientific journal articles), patent application publications, and patents mentioned in this specification are incorporated by reference as if each were specifically and individually indicated to be incorporated by reference.

## Claims

1. A system comprising:
a hygroscopic material;
one or more chlorophyll compounds; and
a substrate including a first side, an opposing second side, and at least one region configured to support the hygroscopic material and the one or more chlorophyll compounds.

2. A method comprising:
directing an atmospheric gas through or past a hygroscopic material and one or more chlorophyll compounds supported by a substrate;
detecting a change in color of the substrate; and
calculating an amount of a target gas present in the atmosphere based, at least in part, on the detected change in color.

3. The system of claim 1, further comprising a plenum chamber, positioned on the first side of the substrate, configured to draw an atmospheric gas from the second side of the substrate, through or past the at least one region supporting the hygroscopic material and the one or more chlorophyll compounds.

4. The system of claim 3, wherein the atmospheric gas is drawn through the at least one region supporting the hygroscopic material and the one or more chlorophyll compounds, to the first side of the substrate.

5. The method of claim 2 or the system of claim 3, wherein the atmospheric gas comprises a target gas.

6. The method or system of claim 5, wherein the target gas comprises a mineral acid or an organic acid.

7. The method or system of claim 5, wherein the target gas comprises hydrochloric acid, hydrobromic acid, hydroiodic acid, sulphuric acid, nitric acid, phosphoric acid, hydrofluoric acid or mixtures thereof.

8. The method or system of claim 5, wherein the target gas comprises oxalic acid, formic acid or mixtures thereof.

9. The method of claim 2 or the system of claim 3, wherein the one or more chlorophyll compounds comprises chlorophyll a, chlorophyll b, chlorophyll c1, chlorophyll c2, chlorophyll d or mixtures thereof.

10. The method of claim 2 or the system of claim 3, wherein the hygroscopic material comprises a cyclodextrin, xylitol, maltitol or mixtures thereof.

11. The system of claim 1, further comprising a detector positioned to detect a change in color of a portion of the substrate.

12. The system of claim 1, further comprising an applicator for applying the hygroscopic material and/or the chlorophyll compound to the substrate.

13. The system of claim 12, wherein the applicator comprises an ink jet printer.

14. The method of claim 2, further comprising directing the gas from the hygroscopic material and one or more chlorophyll compounds to a plenum chamber.

15. The method of claim 2, further comprising calculating an amount of a target gas present in the atmosphere based, at least in part, on the detected change in color.
